# EUROPÄISCHE PATENTSCHRIFT

(11) **EP 1 221 241 B1**
(45) Veröffentlichungstag und Bekanntmachung des Hinweises auf die Patenterteilung: **05.10.2005**
(21) Anmeldenummer: 00981144.9
(22) Anmeldetag: 13.10.2000
(51) Int. Cl.: H04L 29/06, H04L 29/08, G06F 17/30

(54) **VERFAHREN ZUR AUSWAHL, ZUR ÜBERTRAGUNG UND ZUM ABSPIELEN VON MUSIKSTÜCKEN DURCH TEILNEHMER EINES DIGITALEN MOBILKOMMUNIKATIONSSYSTEMS**
METHOD FOR THE SELECTION, TRANSMISSION AND PLAYBACK OF PIECES OF MUSIC BY SUBSCRIBERS OF A DIGITAL MOBILE COMMUNICATION NETWORK
PROCEDE DE SELECTION, DE TRANSMISSION ET DE LECTURE DE MORCEAUX DE MUSIQUE PAR LES ABONNES D'UN SYSTEME DE COMMUNICATION MOBILE NUMERIQUE

(30) Priorität: 15.10.1999 DE 19950001
(43) Veröffentlichungstag der Anmeldung: 10.07.2002
(73) Patentinhaber: T-Mobile Deutschland GmbH, 53227 Bonn (DE)
(72) Erfinder: CYRANKIEWICZ, Arthur, 33335 Gütersloh (DE); MICHEL, Uwe, 53604 Bad Honnef (DE)
(74) Vertreter: Riebling, Peter
(86) Internationale Anmeldenummer: PCT/DE2000/003614
(87) Internationale Veröffentlichungsnummer: WO 2001/028183

(56) Entgegenhaltungen:
- WO-A-97/26601
- DE-A- 19 841 541
- US-A- 5 742 893
- PATENT ABSTRACTS OF JAPAN vol. 1999, no. 11, 30. September 1999 (1999-09-30) & JP 11 164058 A (HITACHI ELECTRON SERVICE CO LTD), 18. Juni 1999 (1999-06-18)
- PATENT ABSTRACTS OF JAPAN vol. 1999, no. 04, 30. April 1999 (1999-04-30) & JP 11 007290 A (TAITO CORP), 12. Januar 1999 (1999-01-12)

## Beschreibung

Die Erfindung betrifft ein Verfahren zur Auswahl, zur Übertragung und zum Abspielen von Musikstücken durch Teilnehmer eines digitalen Mobilkommunikationssystems, wobei in einem Datenbankserver eine Vielzahl von Musikstücken in digitaler Form gespeichert sind.

Diese sogenannten Music-on-Demand-Systeme und -Anbieter sind heute im festnetzgebundenen Internet bereits bekannt, d.h. es existieren Server, von denen mittels Internet-Technologien vom Internetteilnehmer beliebige Musiktitel in einen Personal Computer geladen und dort abgespielt werden können, bzw. auf ein separates Endgerät, einen sogenannten MP3-Player, übertragen und dort abgespielt werden können.

Nachteil der bisher bekannten Systeme ist, daß ein PC mit Internet-Zugang benötigt wird, um auf den Datenbankserver zugreifen zu können. Beim Einsatz von MP3-Playern wird der PC zur Zwischenspeicherung der Audio-Daten und zur Übertragung in den MP3-Player benötigt. Femer ist durch die Notwendigkeit eines PC ein Zugriff auf den Server nicht jederzeit und an jedem Ort möglich.

Die Patent Abstracts of Japan, Vol 1999, No. 11, & JP 11164058 A offenbaren ein Verfahren und System zur Auswahl, zur Übertragung und zum Abspielen von Musikstücken durch Teilnehmer eines digitalen Mobilkommunikationssystems, wobei in einem Datenbankserver eine Vielzahl von Musikstücken in digitaler Form gespeichert sind, der Datenbankserver von einem Mobilendgerät über das Mobilkommunikationssystem angewählt und ein gewünschtes Musikstück ausgewählt wird, und das ausgewählte Musikstück in Form von digitalen Audiodaten vom Datenbankserver über das Mobilkommunikationssystem auf das Mobilendgerät übertragen und dort abgespielt wird.

Die Aufgabe der Erfindung besteht darin, ein Verfahren vorzuschlagen, das den Teilnehmern eines Mobüfunknetzes auf einfache Weise die Auswahl und das Abspielen von Musikstücken über deren Mobilendgerät unter Nutzung von unterstützenden Funktionen des Mobilfunknetzes ermöglicht.

Diese Aufgabe wird erfindungsgemäß durch die in den unabhängigen Patentansprüchen genannten Merkmale gelöst.

Die Erfindung beruht darauf, daß die Datenbank von einem Mobilendgerät über das Mobilkommunikationssystem angewählt und ein gewünschtes Musikstück ausgewählt wird, und das ausgewählte Musikstück von der Datenbank über das Mobilkommunikationssystem auf das Mobilendgerät übertragen und dort abgespielt wird.

In der Ausgestaltung gemäß Anspruch 1 ist der Datenbankserver in die Infrastruktur des Mobilkommunikationssystems eingebunden und kann über eine zugeordnete Adresse oder Rufnummer vom Teilnehmer angewählt werden. Durch das Mobilkommunikationssystem erfolgt eine eindeutige Teilnehmeridentifizierung/Authentisierung für den Zugriff auf den Datenbankserver, wobei die Gebührenabrechnung für die Nutzung des Datenbankservers ebenfalls über das Mobilkommunikatic-nssystem erfolgt.

Die Ausgestaltung gemäß Anspruch 2 sieht vor, daß der Datenbankserver in die Infrastruktur des lnternets eingebunden ist und über eine zugeordnete IP-Adresse vom Teilnehmer angesprochen werden kann. Das macht einen direkten Übergang vom Mobilkommunikationssystem ins Internet notwendig. Dem Teilnehmer bzw. dem Mobilendgerät wird eine temporäre IP-Adresse (IP: Internet Protocol) zur Nutzung des Datenbankservers zugeteilt, wobei die IP-Adresse mit der Teilnehmeridentität verknüpft ist. Anhand der Teilnehmeridentität und der damit verknüpften IP-Adresse kann eine eindeutige Teilnehmeridentifizierung/Authentisierung für den Zugriff auf den Datenbankserver durch das Mobilkommunikationssystem erfolgen. Dabei wird die IP-Source-Adresse vom Datenbankserver als Grundlage der Prüfung der Zugangsberechtigung des Teilnehmers herangezogen. Auch hier erfolgt die Gebührenabrechnung für die Nutzung des Datenbankservers über das Mobilkommunikationssystem.

Ein Endgerät, welches die Funktionen eines Mobilen Terminals (z.B. GSM Handy) mit den Funktionen eines Walkman/Discman kombiniert wird im folgenden als Mobile-Music-on-Demand Endgerät (MMOD-Endgerät) bezeichnet und bietet folgende Vorteile:

Das MMOD-Endgerät ermöglicht, verglichen z.B. mit einem Walkman, den spontanen Zugriff auf ein beliebig großes Repertoire an Musiktiteln und ist nicht auf einen Datenträger (Cassette, CD) mit begrenztem Musikrepertoire beschränkt. Im Gegensatz zu den heutigen MP3-Playern wird kein zusätzlicher PC mit Internet-Zugang benötigt, um auf den Datenbankserver (MMOD-Server) zugreifen zu können. Es entfällt die Notwendigkeit zur Zwischenspeicherung der Audiodaten im PC und deren Übertragung in den MP3-Player.

Das erfindungsgemäße MMOD-System, bedient sich dem Mobilfunknetz, das als Transportnetz für die Musikdaten agiert und hierbei unterstützende Funktionen (Teilnehmeridentifikation, Vergebührungsfunktionen) anbietet. Ein MMOD-System besitzt folgende Vorteile gegenüber dem heutigen Stand der Technik:

Das Mobilfunknetz ermöglicht eine eindeutige Teilnehmeridentifizierung/Authentisierung, als unterstützende Funktion für den MMOD-Server. Hiermit entfällt für den Benutzer die Notwendigkeit eines zusätzlichen Logins (Username / Password) gegenüber dem MMOD-Server. Die Teilnehmerauthentisierung ist wichtige Voraussetzung für die Möglichkeit zur Vergebührung eines MMOD-Dienstes und zur Personalisierung des Musikangebotes.
Der Zugriff auf den MMOD-Server erfolgt mobil, d.h. jederzeit und an jedem Ort, wo die notwendige Funkversorgung vorliegt.

Eine bevorzugte Ausführungsform der Erfindung sieht vor, daß das Musikstück - ähnlich wie bei einer Musikbox - im Endgerät unmittelbar abgespielt wird. Es kann jedoch auch vorgesehen sein, daß das Musikstück im Endgerät abgespeichert wird und zu einem beliebigen späteren Zeitpunkt abspielbar ist.

Um die Übertragungszeiten kurz zu halten und die begrenzte Übertragungsbandbreite heutiger Mobilfunknetze auszunutzen werden die Audiodaten in komprimierter Form übertragen.

Der Teilnehmer kann somit mittels der Endgeräte-Mensch-Maschine-Schnittstelle (MMI) den oder die nachfolgend abzuspielenden Titel auswählen und seine Auswahl über das Mobilkommunikationssystem an den Datenbankserver übermittelt.

Da die Nutzung des Dienstes an eine Teilnehmeridentität geknüpft ist, kann dem Benutzer ein personalisiertes Musikverzeichnis angeboten werden, aus dem er die gewünschten Musiktitel auswählen kann.

Das Mobilfunkendgerät zur Nutzung des Dienstes beinhaltet die Funktionen eines Mobilen Terminals und die Funktionen eines Abspielgerätes für in digitaler Form verfügbare Musikstücke. Das Endgerät verfügt über eine geeignete Browsersoftware, im welcher die URL oder die unmittelbare IP-Adresse des anzuwählenden Servers hinterlegt ist.

Nachfolgend wird die Erfindung anhand eines Ausführungsbeispiels unter Bezugnahme auf die Zeichnungsfiguren näher erläutert. Aus den Zeichnungen und ihrer Beschreibung gehen weitere Merkmale und Vorteile der Erfindung hervor. Es zeigen:
- Figur 1 :: Grundsätzliche Infrastruktur zur Durchführung des erfindungsgemäßen Verfahrens;
- Figur 2:: Verdeutlicht den Nachrichtenfluß beim Verbindungsaufbau und der Zuteilung der IP-Adressen.

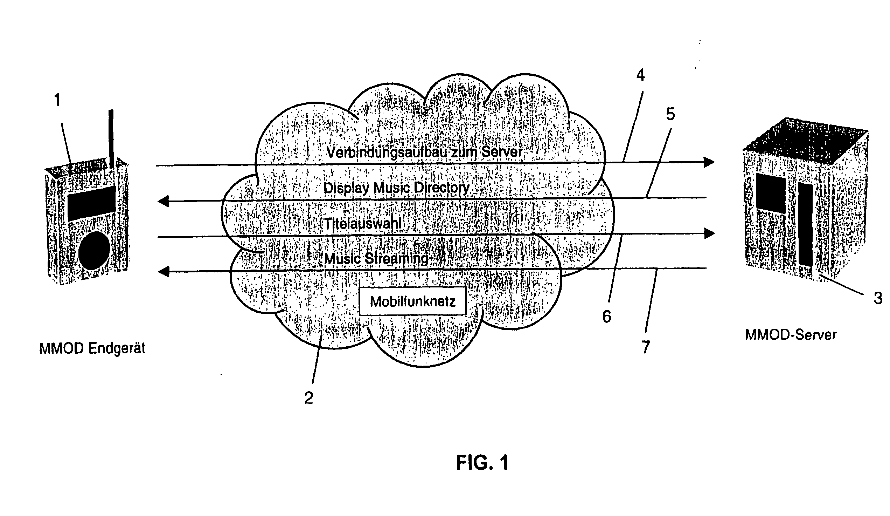

Die Gesamtinfrastruktur des erfindungsgemäßen MMOD-Systems besteht gemäß Figur 1 im wesentlichen aus dem MMOD-fähigen Mobilendgerät 1, einem Mobilfunknetz 2 und einem MMOD-Datenbankserver 3.

Ein Verbindungsaufbau zwischen Endgerät 1 und Datenbankserver 3 wird wie folgt hergestellt. Nach dem Einschalten des Endgerätes 1 baut dieses nach erfolgtem Einbuchen im Mobilfunknetz 2, automatisch oder veranlaßt durch den Mobilfunkteilnehmer eine Datenverbindung 4 zu einem ausgewählten Datenbankserver 3 auf. Grundsätzlich können eine Vielzahl von Datenbankservern mit abrufbaren Musiktiteln angesprochen werden.

Das MMOD-Endgerät 1 beinhaltet einen MMOD-Browser, ähnlich der heute bekannten Internet-www-Browser, im welchem die URL (Unified Ressource Locator, als Repräsentanz einer IP-Zieladresse) oder die unmittelbare IP-Adresse des anzuwählenden Servers 3 hinterlegt ist. Nach Selbststart des Browsers wird eine Ende-zu-Ende IP-Session zwischen Endgerät 1 und Server 3 aufgebaut. Die URL bzw. IP-Zieladresse des Servers 3 ist mittels Endgeräte-MMI (Man Machine Interface) durch den Benutzer konfigurierbar.

Der MMOD-Server 3 steht "frei" im Internet. Dementsprechend besitzt das Mobilfunknetz 2 in diesem Szenario einen direkten Übergang ins Internet. Die Verbindung zum Internet kann z.B. in bekannter Weise unter Anwendung des Wireless Application Protocol (WAP) erfolgen. Der Mobifunknetzbetreiber agiert hierbei als Internet-Service-Provider (ISP). Alternativ hierzu sind auch Szenarien denkbar, bei denen ein bereits existierenden Internet-Service-Provider im Auftrag des Mobilnetzbetreibers den Übergang ins Internet realisiert. Im folgenden wird vereinfachend davon ausgegangen, daß der Mobilnetzbetreiber selbst als ISP agiert.

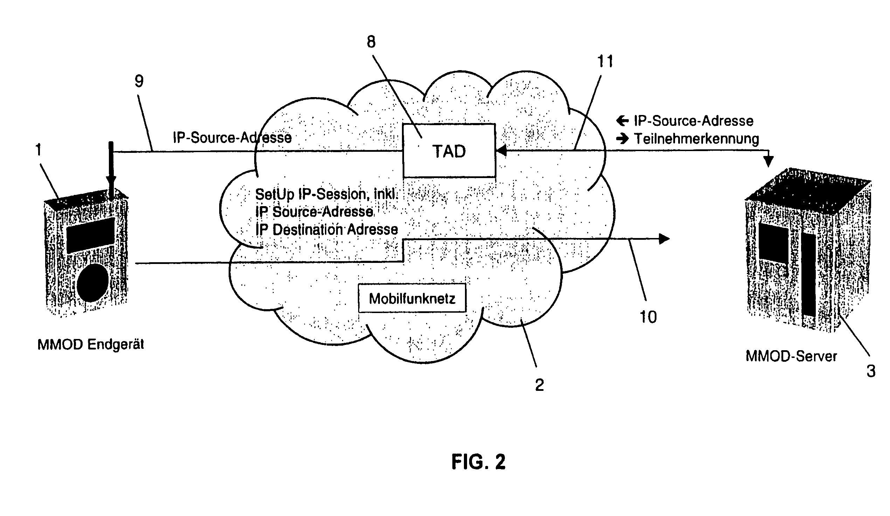

Gemäß Figur 2 wird beim Verbindungsaufbau dem MMOD-Endgerät 1 eine IP-Source-Adresse aus dem Range des Mobilnetzbetreibers zugeteilt (Position 9). Diese IP· Source-Adresse wird an den Datenbankserver 3 übertragen (Position 10) und nachfolgend vom MMOD-Server 3 als Grundlage der Prüfung herangezogen, ob der Teilnehmer zum Zugriff auf den Datenbankserver 3 berechtigt ist. Da die IP-Source-Adresse dynamisch vom Mobilnetzbetreiber/ISP (von nun an Mobile-ISP genannt) verteilt wird, verwaltet der Mobile-ISP die Relation zwischen IP-Adresse und Teilnehmeridentität. Diese Relation wird in einer entsprechenden Datenbank 8 TAD im Mobilnetz 2 gespeichert (Teilnehmer/IP-Adress-Datenbank: TAD), die vom MMOD-Server 3 abgefragt werden kann.

In dem dargestellten Szenario wird davon ausgegangen, daß eine Teilnehmerverwaltung und die Verwaltung zugehöriger Berechtigungen im MMOD-Server 3 erfolgt. Das Mobilnetz 2 unterstützt hierbei den Vorgang der Teilnehmeridentifikation/Authentikation, indem dem MMOD-Server 3 anhand der IP-Adresse die gesicherte Teilnehmeridentität/-kennung auf Anfrage von der TAD Datenbank 8 bereitgestellt wird ( siehe Position 11). Dies ist insbesondere in solchen Mobilfunknetzen interessant, die bereits eine implizite Authentikation von Endgeräten durchführen (z.B. GSM) und somit den Teilnehmer eindeutig identifizieren können.

Alternativ hierzu kann auch die Verwaltung von Authentikationsparametern (Usernames/Password) im MMOD-Server 3 erfolgen. In diesem Fall findet statt der Abfrage der TAD-Datenbank 8 im Mobilfunknetz 2 eines Login-Prozedur zwischen Endgerät 1 und Server 3 statt. In diesem Fall werden Login-Daten (Username/Password) im Endgerät durch den Teilnehmer eingetragen und beim Verbindungsaufbau zum MMOD-Server 3 mitübertragen.

Nachdem die IP-Session zwischen Endgerät 1 und Server 3 aufgebaut wurde agiert das Mobilfunknetz 2 nur noch als reines Transportnetz für die Steuerungs- und Musikdaten. Der weitere Kommunikationsfluß findet unmittelbar zwischen den Applikationen im Endgerät 1 und Server 3 statt.

Nachdem im Rahmen des Verbindungsaufbaus durch den MMOD-Server die Teilnehmeridentität festgestellt wurde, wird dem Benutzer gemäß Figur 1 nunmehr ein personalisiertes Music-Directory (Position 5) angeboten, aus dem er die gewünschten Titel nachfolgend auswählen kann. Der Teilnehmer erhält die Möglichkeit die Darstellung des Music-Directories (d.h. Inhaltsverzeichnis abrufbarer Musiktitel) am Endgerät 1 gemäß seinen eigenen Wünschen anzupassen. Hierzu wird dem Teilnehmer z.B. eine entsprechende www-Page im Internet angeboten, die es ihm erlaubt die notwendigen Einstellungen vorzunehmen und das eigene Profil auf dem MMOD-Server 3 zu hinterlegen. Als Folge der Personalisierung des Music-Directories findet der Teilnehmer auf dem Endgerät 1 die gewünschte Benutzeroberfläche vor.

Der Teilnehmer wählt aus dem angezeigten Verzeichnis der Musiktitel mittels Endgeräte-MMI den oder die nachfolgend abzuspielenden Titel aus und übermittelt diese zum MMOD-Server (Position 6).

Die ausgewählten Musiktitel werden z.B. im Streaming-Verfahren vom MMOD-Server 3 via Mobilfunknetz 2 ins Endgerät 1 übertragen (Position 7) und vorzugsweise unmittelbar vom Endgerät 1 abgespielt. Alternativ hierzu können die geladenen Audiodaten im Endgerät 1 auch zwischengespeichert oder zumindest gepuffert werden um etwaige Übertragungsengpässe im Mobilfunknetze zu kompensieren oder auch, um die Musikstücke erst gezielt später anzuhören.

Um eine annehmbare Audio-Qualität bei der begrenzten Übertragungsbandbreite heutiger Mobilfunknetze zu erzielen müssen die Audiodaten entsprechend komprimiert werden. Gängige Verfahren sind derzeit MP3 oder RealAudio.

### Zeichnungslegende

- 1: MMOD Endgerät
- 2: Mobilfunknetz
- 3: MMOD Datenbankserver
- 4: Verbindungsaufbau
- 5: Anzeige Musik Directory
- 6: Titelauswahl
- 7: Musikdatenübertragung
- 8: TAD (Teilnehmer/IP-Adress Datenbank)
- 9: Datenübertragung
- 10: Datenübertragung
- 11: Datenübertragung

## Patentansprüche

1. Verfahren zur Auswahl, zur Übertragung und zum Abspielen von Musikstücken durch Teilnehmer eines digitalen Mobilkommunikationssystems, wobei in einem Datenbankserver eine Vielzahl von Musikstücken in digitaler Form gespeichert sind,
der Datenbankserver (3) von einem Mobilendgerät (1) über das Mobilkommunikationssystem (2) angewählt und ein gewünschtes Musikstück ausgewählt wird, und das ausgewählte Musikstück in Form von digitalen Audiodaten vom Datenbankserver (3) über das Mobilkommunikationssystem (2) auf das Mobilendgerät (1) übertragen und dort abgespielt wird,
**dadurch gekennzeichnet,**
**daß** der Datenbankserver (3) in die Infrastruktur des Mobilkommunikationssystems (2) eingebunden ist und über eine zugeordnete Rufnummer vom Teilnehmer angewählt werden kann,
**daß** eine eindeutige Teilnehmeridentifizierung/Authentisierung für den Zugriff auf den Datenbankserver (3) durch das Mobilkommunikationssystem (2) erfolgt, und **daß** die Gebührenabrechnung für die Nutzung des Datenbankservers (3) über das Mobilkommunikationssystem (2) erfolgt.

2. Verfahren zur Auswahl, zur Übertragung und zum Abspielen von Musikstücken durch Teilnehmer eines digitalen Mobilkommunikationssystems, wobei in einem Datenbankserver eine Vielzahl von Musikstücken in digitaler Form gespeichert sind, der Datenbankserver (3) von einem Mobilendgerät (1) über das Mobilkommunikationssystem (2) angewählt und ein gewünschtes Musikstück ausgewählt wird, und das ausgewählte Musikstück in Form von digitalen Audiodaten vom Datenbankserver (3) über das Mobilkommunikationssystem (2) auf das Mobilendgerät (1) übertragen und dort abgespielt wird,
**dadurch gekennzeichnet,**
**daß** das Mobilkommunikationssystem (2) einen direkten Übergang ins Internet aufweist,
**daß** der Datenbankserver (3) in die Infrastruktur des Internets eingebunden ist und über eine zugeordnete Internetadresse vom Teilnehmer angesprochen werden kann,
**daß** dem Teilnehmer bzw. dem Mobilendgerät (1) eine temporäre IP-Adresse zur Nutzung des Datenbankservers (3) zugeteilt wird, wobei die IP-Adresse mit der Teilnehmeridentität verknüpft ist,
**daß** die IP-Source-Adresse vom Datenbankserver (3) als Grundlage der Prüfung der Zugangsberechtigung des Teilnehmers herangezogen wird, und
**daß** die Gebührenabrechnung für die Nutzung des Datenbankservers (3) über das Mobilkommunikationssystem (2) erfolgt.

3. Verfahren nach Anspruch 1 oder 2, **dadurch gekennzeichnet, daß** das Musikstück im Endgerät (1) unmittelbar abgespielt wird.

4. Verfahren nach Anspruch 1 bis 3, **dadurch gekennzeichnet, daß** das Musikstück im Endgerät (1) abgespeichert wird und zu einem beliebigen späteren Zeitpunkt abspielbar ist.

5. Verfahren nach einem der Ansprüche 1 bis 4, **dadurch gekennzeichnet, daß** die Audiodaten in komprimierter Form übertragen werden.

6. Verfahren nach einem der Ansprüche 1 bis 5, **dadurch gekennzeichnet, daß** der Teilnehmer mittels der Mensch-Maschine-Schnittstelle (MMI) des Endgeräts (1) den oder die nachfolgend abzuspielenden Musiktitel auswählt und seine Auswahl über das Mobilkommunikationssystem (2) an den Datenbankserver (3) übermittelt.

7. Verfahren nach einem der Ansprüche 1 bis 6, **dadurch gekennzeichnet, daß** dem Benutzer ein personalisiertes Musikverzeichnis angeboten wird, aus dem er die gewünschten Musiktitel auswählen kann.

8. Verfahren nach einem der Ansprüche 1 bis 7, **dadurch gekennzeichnet, daß** das Mobilfunkendgerät (1) die Funktionen eines mobilen Terminals und die Funktionen eines Abspielgerätes für in digitaler Form verfügbare Musikstücke bereitstellt.

9. Verfahren nach einem der Ansprüche 1 bis 8, **dadurch gekennzeichent, daß** der Datenbankserver (3) mittels einer URL oder einer unmittelbaren IP-Adresse angewählt wird, die in einer im Mobilfunkendgerät (1) installierten Browsersoftware hinterlegt ist.

## Claims

1. Method for the selection, transmission and playing of pieces of music by subscribers to a digital mobile communications system, wherein a plurality of pieces of music are stored in digital form in a data bank server, the data bank server (3) is dialled up by a mobile terminal (1) via the mobile communications system (2) and a desired piece of music is selected, and the selected piece of music is transmitted in the form of digital audio data from the data bank server (3) via the mobile communications system (2) to the mobile terminal (1) and played there, **characterised in that** the data bank server (3) is integrated in the infrastructure of the mobile communications system (2) and can be dialled up by the subscriber via an assigned telephone number, **in that** a unique subscriber identification/authentication is effected for access to the data bank server (3) by the mobile communications system (2), and **in that** charging for use of the data bank server (3) is effected via the mobile communications system (2).

2. Method for the selection, transmission and playing of pieces of music by subscribers to a digital mobile communications system, wherein a plurality of pieces of music are stored in digital form in a data bank server, the data bank server (3) is dialled up by a mobile terminal (1) via the mobile communications system (2) and a desired piece of music is selected, and the selected piece of music is transmitted in the form of digital audio data from the data bank server (3) via the mobile communications system (2) to the mobile terminal (1) and played there, **characterised in that** the mobile communications system (2) has a direct junction with the internet, **in that** the data bank server (3) is integrated in the infrastructure of the internet and can be addressed by the subscriber via an assigned internet address, **in that** the subscriber or the mobile terminal (1) is allocated a temporary IP address for use of the data bank server (3), the IP address being linked to the subscriber identity, **in that** the IP source address is consulted by the data bank server (3) as a basis of checking of the subscriber's authorisation for access, and **in that** charging for use of the data bank server (3) is effected via the mobile communications system (2).

3. Method according to claim 1 or 2, **characterised in that** the piece of music is played directly in the terminal (1).

4. Method according to claims 1 to 3, **characterised in that** the piece of music is stored in the terminal (1) and playable at any desired later time.

5. Method according to one of claims 1 to 4, **characterised in that** the audio data are transmitted in compressed form.

6. Method according to one of claims 1 to 5, **characterised in that** the subscriber selects the music title or titles to be played thereafter by means of the man-machine interface (MMI) of the terminal (1) and transmits his selection via the mobile communications system (2) to the data bank server (3).

7. Method according to one of claims 1 to 6, **characterised in that** the user is offered a personalised list of music from which he can select the desired music titles.

8. Method according to one of claims 1 to 7, **characterised in that** the mobile telephone terminal (1) provides the functions of a mobile terminal and the functions of a playback device for pieces of music available in digital form.

9. Method according to one of claims 1 to 8, **characterised in that** the data bank server (3) is dialled up by means of a URL or a direct IP address which is filed in browser software installed in the mobile telephone terminal (1).

## Revendications

1. Procédé de sélection, de transmission et de lecture de morceaux de musique par les abonnés d'un système de communication mobile numérique, selon lequel un grand nombre de morceaux de musique est mis en mémoire sous forme numérique dans un serveur de banque de données,
le serveur (3) est sélectionné par un terminal mobile (1) par l'intermédiaire du système de communication mobile (2) et un morceau de musique souhaité est choisi, et le morceau choisi est transmis sous forme de données audio numériques par le serveur (3) au terminal (1) par l'intermédiaire du système de communication mobile (2) et est lu sur le terminal (1),
**caractérisé en ce que** le serveur de banque de données (3) est intégré dans l'infrastructure du système de communication mobile (2) et peut être choisi par l'abonné grâce à un numéro d'appel associé,
**en ce qu'**une identification/authentification univoque d'abonné pour l'accès au serveur (3) a lieu grâce au système de communication mobile (2),
**et en ce que** la facturation pour l'utilisation du serveur (3) se fait par l'intermédiaire du système de communication mobile (2).

2. Procédé de sélection, de transmission et de lecture de morceaux de musique par les abonnés d'un système de communication mobile numérique, selon lequel un grand nombre de morceaux de musique est mis en mémoire sous forme numérique dans un serveur de banque de données, le serveur (3) est sélectionné par un terminal (1) par l'intermédiaire du système de communication mobile (2) et un morceau de musique souhaité est choisi, et le morceau choisi est transmis sous forme de données audio numériques par le serveur (3) au terminal (1) par l'intermédiaire du système de communication mobile (2) et est lu sur le terminal (1),
**caractérisé en ce que** le système de communication mobile (2) a un accès direct à l'Internet,
**en ce que** le serveur (3) est intégré dans l'infrastructure de l'Internet et l'abonné peut s'adresser au serveur grâce à une adresse Internet associée,
**en ce qu'**une adresse IP temporaire est attribuée à l'abonné ou au terminal mobile (1) en vue d'une utilisation du serveur (3), l'adresse IP étant liée à l'identité de l'abonné,
**en ce que** l'adresse source IP est utilisée par le serveur (3) comme base du contrôle d'autorisation d'accès de l'abonné,
**et en ce que** la facturation pour l'utilisation du serveur (3) se fait par l'intermédiaire du système de communication mobile (2).

3. Procédé selon la revendication 1 ou 2, **caractérisé en ce que** le morceau de musique est lu directement dans le terminal (1).

4. Procédé selon les revendications 1 à 3, **caractérisé en ce que** le morceau de musique est stocké dans le terminal (1) et est apte à être lu à n'importe quel moment ultérieur.

5. Procédé selon l'une des revendications 1 à 4, **caractérisé en ce que** les données audio sont transmises sous forme comprimée.

6. Procédé selon l'une des revendications 1 à 5, **caractérisé en ce que** l'abonné choisit à l'aide de l'interface homme-machine (MMI) du terminal (1) le ou les titres musicaux à lire ensuite et transmet son choix au serveur (3) par l'intermédiaire du système de communication mobile (2).

7. Procédé selon l'une des revendications 1 à 6, **caractérisé en ce qu'**on offre à l'utilisateur une liste de musique personnalisée dans laquelle il peut choisir les titres souhaités.

8. Procédé selon l'une des revendications 1 à 7, **caractérisé en ce que** le terminal mobile (1) offre les fonctions d'un terminal mobile et les fonctions d'un appareil de lecture pour des morceaux de musique disponibles sous forme numérique.

9. Procédé selon l'une des revendications 1 à 8, **caractérisé en ce que** le serveur (3) est choisi à l'aide d'une adresse URL ou d'une adresse IP directe qui est stockée dans un logiciel de navigateur installé dans le terminal radiotéléphonique mobile (1).
